# FASCICULE DE BREVET EUROPEEN

(11) **EP 1 747 125 B1**
(45) Date de publication et mention de la délivrance du brevet: **24.02.2010**
(21) Numéro de dépôt: 05773035.0
(22) Date de dépôt: 18.05.2005
(51) Int. Cl.: B60R 21/34

(54) **ELEMENT FORMANT SUPPORT POUR UNE PARTIE DE VEHICULE AUTOMOBILE**
STÜTZELEMENT FÜR EIN AUTOTEIL
ELEMENT FORMING A SUPPORT FOR A PART OF A MOTOR CAR

(30) Priorité: 19.05.2004 FR 0405489
(43) Date de publication de la demande: 31.01.2007
(73) Titulaire: Inoplast, 07100 Annonay (FR); Renault SAS, 92100 Boulogne Billancourt (FR)
(72) Inventeur: MARTIN, Laurent, René, Félix, F-07340 Peaugres (FR); TETU, Yvon, F-92250 La Garenne Colombes (FR); ZANOLIN, Dominique, F-78150 Le Chesnay (FR)
(74) Mandataire: Remy, Vincent Noel Paul
(86) Numéro de dépôt international: PCT/FR2005/001245
(87) Numéro de publication internationale: WO 2005/120908

(56) Documents cités:
- EP-A- 1 138 579
- EP-A- 1 277 630
- EP-A- 1 398 249

## Description

La présente invention concerne un élément formant support pour une partie de véhicule automobile.

Lorsqu'un véhicule automobile progressant normalement vers l'avant percute au niveau des jambes un piéton, la tête de celui-ci heurte bien souvent le capot ou le dessus de l'une des ailes avant de ce véhicule.

Afin de réduire le nombre et la gravité des blessures consécutives aux accidents entre un piéton et un véhicule automobile ont été proposées des solutions pour amortir un choc descendant, appliqué sur le capot avant et/ou sur l'une des ailes avant d'un véhicule automobile. L'une d'elles est décrite dans le document EP-A-1 138 579 qui correspond au préambule de la revendication 1. Plus précisément, aux figures 38 à 41 de ce document est représenté partiellement une aile avant de véhicule automobile, qui comporte une embase pour sa fixation, ainsi qu'un rebord supérieur reliant cette embase au reste de l'aile avant. Ce rebord comporte une paroi oblique et discontinue, ainsi que plusieurs groupements identiques de trois parois successives et coudées, à savoir une paroi arrière, une paroi centrale et une paroi avant. Ces groupements, au niveau desquels la paroi oblique est interrompue, sont répartis le long du rebord supérieur de l'aile avant. Dans chacun d'eux, les parois avant et arrière sont reliées par la paroi centrale, qui est percée d'une fente verticale. En cas de choc descendant, la paroi oblique bascule, tandis que les trois parois de chaque groupement plient au niveau de leurs coudes et que les fentes verticales percées dans les parois centrales des groupements se referment du fait d'un rapprochement de leurs bords avant et arrière. Il n'y a pas de rupture des parois centrales des groupements, qui subissent une déformation élastique. Lorsqu'une personne s'assoit sur l'aile avant et y applique un effort statique, c'est-à-dire un effort sensiblement constant, et non un choc, la paroi oblique et les groupements successifs se déforment comme dans le cas d'un choc, quoique dans une moindre mesure. En d'autres termes, le comportement des moyens d'amortissement de la solution évoquée ci-dessus est linéaire et n'est pas différent que l'aile avant et/ou le capot avant subissent un choc descendant ou bien qu'ils soient soumis à un effort statique. Or, on souhaite que la déformation résultant d'un tel effort statique reste inférieure à un seuil prédéterminé..

L'invention a pour but qu'augmenter la rigidité, en l'absence de choc, d'un amortisseur pour *choc* descendant appliqué sur le dessus de la partie avant d'une carrosserie de véhicule automobile.

A cet effet, l'invention a pour objet un élément formant support pour une partie de véhicule automobile, cet élément comprenant au moins un amortisseur de choc moulé d'un seul tenant et comportant :
- une portion inférieure,
- des premier et deuxième montants en regard dont chacun monte à partir de la portion inférieure et comprend un coude d'amorce de pliage ou de rupture sous l'effet d'un choc, et
- une portion supérieure que les premier et deuxième montants relient à la portion inférieure, caractérisé en ce que l'amortisseur de choc comprend un voile qui comporte au moins une première zone de rupture sous l'effet d'un choc, ainsi qu'une zone coudée d'amorce de pliage, formant une deuxième zone de rupture du voile sous l'effet d'un choc, et qui relie la portion inférieure à la portion supérieure, ainsi que les premier et deuxième montants l'un à l'autre.

Selon d'autres caractéristiques avantageuses de cet élément de véhicule automobile :
- le coude de chaque montant a une concavité tournée vers l'autre montant;
- la zone de rupture est une zone de rupture en cas de sollicitation en traction traduisant que les montants s'éloignent l'un de l'autre ;
- la première zone de rupture est une zone amincie du voile, des parties de la première zone de rupture ayant une épaisseur moindre que le reste de cette zone de rupture;
- la zone coudée du voile relie le coude du premier montant au coude du deuxième montant ;
- la première zone de rupture du voile est une zone périphérique par laquelle ce voile se raccorde sur les portions inférieure et supérieure de l'amortisseur de choc et sur les premier et deuxième montants ;
- la zone coudée d'amorce de pliage est une zone de moindre résistance;
- au moins la zone de moindre résistance est une zone amincie du voile ;
- le voile est dépourvu de trous et ferme complètement le passage que délimite entre eux les premier et deuxième montants et les portions inférieure et supérieure de l'amortisseur de choc;
- chacun des premier et deuxième montants est relié à l'une au moins des portions inférieure et supérieure de l'amortisseur de choc par une zone de moindre résistance;
- la portion inférieure de l'amortisseur de choc est une embase de fixation de l'élément de véhicule automobile sur une structure porteuse d'assemblage d'une carrosserie de véhicule automobile;
- cet élément de véhicule automobile est une partie de structure porteuse d'assemblage d'une carrosserie de véhicule automobile ;
- cet élément de véhicule automobile est un élément intermédiaire de support d'une aile avant du véhicule automobile, la portion inférieure de l'amortisseur de choc étant adaptée pour être fixée sur une structure porteuse d'assemblage de la carrosserie du véhicule, la portion supérieure de l'amortisseur de choc étant adaptée pour y fixer l'aile avant ;.
- la portion supérieure de l'amortisseur de choc comporte une traverse qui relie les premier et .deuxième montants l'un à l'autre et une platine de fixation de l'aile avant, cette platine s'étendant vers le bas à partir de la traverse ;
- le voile s'étend de manière sensiblement parallèle à la direction (X-X') selon laquelle lesdits premier et deuxième montants (8, 9) sont décalés l'un de l'autre.

L'invention sera bien comprise à la lecture de la description qui va suivre, donnée uniquement à titre d'exemple et faite en se référant aux dessins annexés, sur lesquels:
- la figure 1 est une section transversale, schématique ét simplifiée de la portion avant gauche d'un véhicule automobile dont chacune des ailes avant est supportée par plusieurs éléments intermédiaires de support selon un premier mode de réalisation de l'invention
- la figure 2 est une vue en perspective d'un des éléments intermédiaires qui supportent l'aile avant gauche du véhicule partiellement représentée à la figure 1 ;
- la figure 3 est une vue en perspective selon un autre angle de l'élément intermédiaire de support représenté à la figure 2;
- la figure 4 est une vue de côté de l'élément intermédiaire de support représenté aux figures 2 et 3;
- la figure 5 est une section selon le plan V à la figure 4 ;
- la figure 6 est un schéma illustrant le fonctionnement en amortisseur de choc de l'élément intermédiaire de support des figures 2 à 5;
- la figure 7 est une section analogue à la figure 5 et illustre le comportement d'un voile de l'élément intermédiaire de support des figures 2 à 6 en cas de choc ; et
- la figure 8 est une section longitudinale, schématique et simplifiée de la portion avant d'un véhicule automobile dont le capot avant est maintenu en position fermée par un mécanisme de verrouillage porté par une traverse supérieure selon un deuxième mode de réalisation de l'invention.

Dans le présent texte, les termes « avant », « arrière », -« droit », « gauche », ainsi que les termes analogues, se réfèrent au sens normal de progression du véhicule automobile considéré.

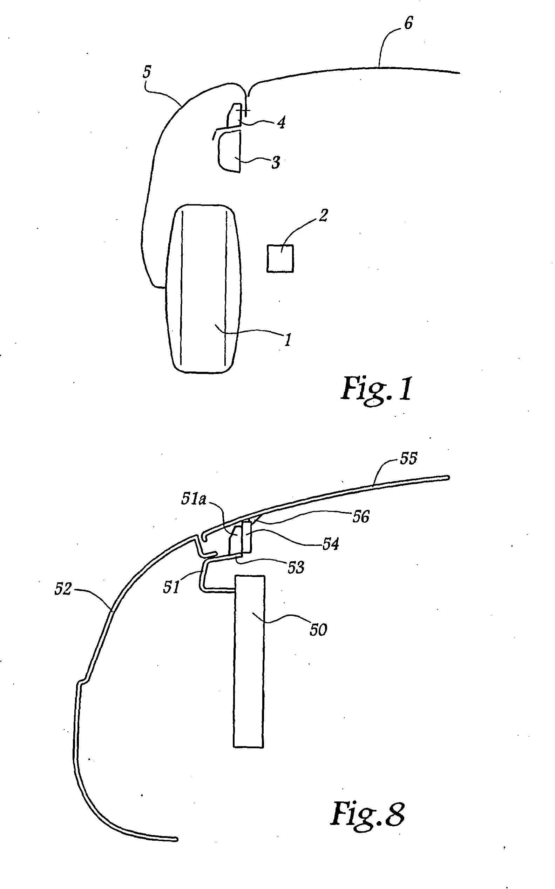

Sur la figure 1 est représentée schématiquement la partie avant gauche de la carrosserie d'un véhicule automobile et de la structure porteuse sur laquelle est montée cette carrosserie. Cette structure porteuse et cette carrosserie ont une partie avant droite qui est symétrique de leur partie avant gauche et qui n'est pas décrite dans ce qui suit.

Toujours sur la figure 1, la référence 1 et la référence 2 désignent respectivement la roue avant gauche du véhicule automobile et le longeron gauche du châssis du véhicule automobile. Sur ce châssis est assemblée la structure porteuse sur laquelle est montée la carrosserie du véhicule automobile. Sur une poutre supérieure gauche 3 de cette structure porteuse est fixé un élément intermédiaire 4 qui supporte l'aile avant gauche 5 de la carrosserie du véhicule automobile. La référence 6 désigne le capot du véhicule automobile.

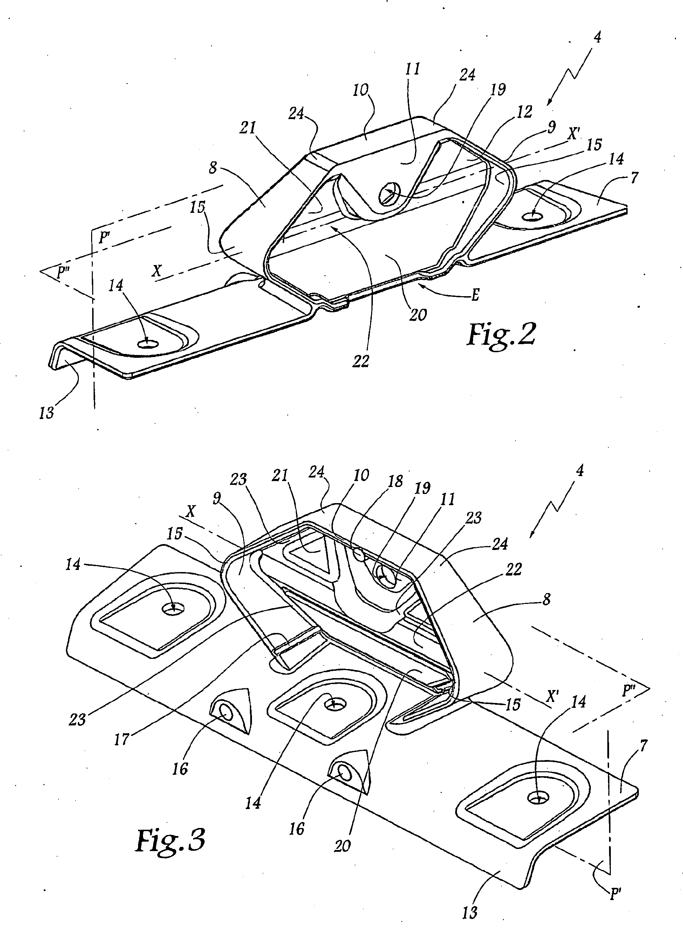

L'élément intermédiaire de support 4, qui est représenté seul sur les figures 2 à 6, forme un amortisseur de choc. Sa partie inférieure forme une embase 7 de fixation sur la poutre 3. A partir de l'embase 7 s'étendent vers le haut deux montants en regard, à savoir un montant arrière 8 et un montant avant 9. Ces montants 8 et 9 relient l'embase de fixation 7 à une traverse supérieure 10 bordée par une platine 11 pour la fixation de l'aile avant 5 sur l'élément de support 4. Un voile interne 12 ferme complètement le passage que délimitent entre eux l'embase 7, les montants 8 et 9, et la portion supérieure de l'élément 4, cette portion supérieure étant constituée de la traverse 10 et de la platine 11.

L'embase 7 présente la forme d'une plaque munie d'un rebord 13 et destinée à être fixée contre la poutre supérieure 3 à l'aide d'organes non représentés. Elle est percée de trois trous 14 pour le passage de ces organes qui peuvent, par exemple, être des vis ou des rivets. Il doit être compris que le nombre de trous 14 peut être différent de trois, par exemple égal à 1 ou 2, selon le type d'application. De plus, l'amortisseur de choc peut ne pas être rapporté sur une portion de la structure porteuse d'assemblage de la carrosserie du véhicule, mais être d'un seul tenant avec cette portion, qui remplace l'embase 7. Dans ce cas, les trous 14 ne sont pas nécessaires.

Une échancrure E est prévue dans l'embase 7, au droit de l'embase 11. Dans sa zone de raccordement sur le reste de l'embase 7, le rebord 13 comporte deux protubérances, dont chacune définit une surface 16 sensiblement verticale à la figure 3 et destinée à recevoir la poussée d'un éjecteur lors du démoulage de l'élément de support 4.

Le montant arrière 8 comporte un coude 15 d'amorce de pliage ou de rupture, dont la concavité est tournée vers le montant avant 9 de sorte que l'amortisseur de choc a une forme globale d'hexagone. Plus précisément, ce montant 8 présente la forme d'une paroi dont la section transversale selon un plan vertical antéro-postérieur, tel que le plan P' schématisé aux figures 2 et 3, a globalement la forme d'un V pivoté d'un quart de tour. Le montant 8 se raccorde sur l'embase 7 par une zone amincie de moindre résistance 17, qui s'étend selon une ligne transversale.

Le montant avant 9 est symétrique du montant arrière 8 par rapport à un plan P de symétrie de l'élément de support 4 et n'est pas décrit plus en détail ici. Dans ce qui suit, ses parties sont désignées par les mêmes références que les parties analogues du montant 8.

La traverse 10 présente la forme d'une paroi se prolongeant par les montants 8 et 9. Elle porte un bourrelet transversal 18 destiné à recevoir la poussée d'un éjecteur lors du démoulage de l'élément de support 4. La platine 11 s'étend en direction de l'embase 7 à partir du bord droit de cette traverse 10. Elle est percée d'un trou 19 pour le passage d'un organe non représenté, tel qu'une vis ou un rivet, de fixation de l'aile avant 5 sur l'élément de support 4.

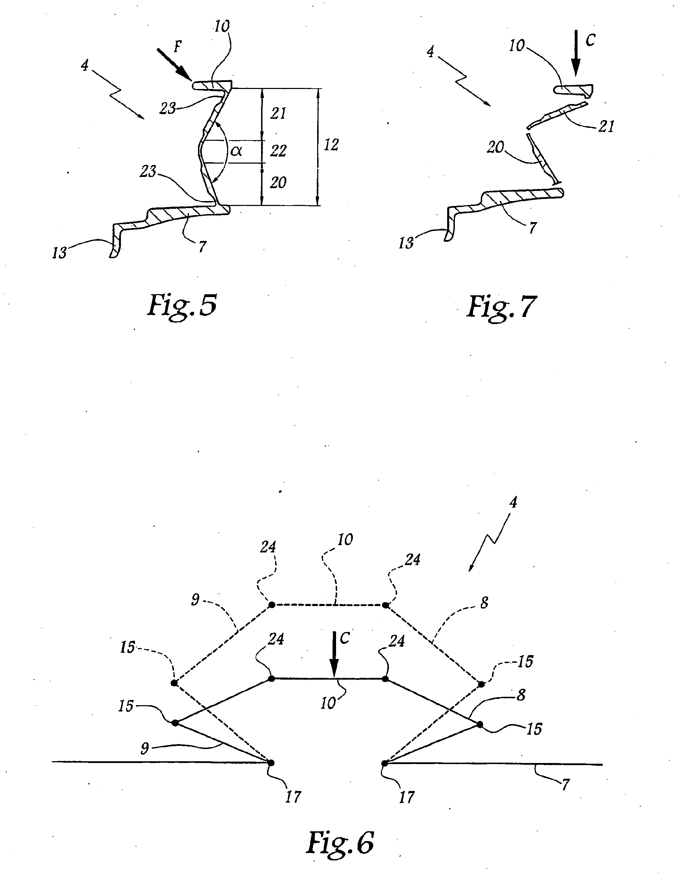

Le voile 12 relie les montants 8 et 9 l'un à l'autre, ainsi que l'embase 7 aux parties 10 et 11. Il comporte une partie inférieure 20 et une partie supérieure 21 qui sont inclinées l'une par rapport à l'autre d'un angle α de l'ordre de 145°, la valeur de cet angle pouvant, en pratique avoir une valeur comprise entre 90° et 160°. En d'autres termes, la section transversale du voile 12 selon un plan vertical, tel que le plan de coupe V, a globalement la forme d'un V basculé d'un quart de tour, ainsi qu'on peut le voir à la figure 5. Dans l'exemple représenté, la platine 11 divise la partie supérieure 21 du voile 12 en deux.

Une zone coudée 22 d'amorce de pliage ou de rupture du voile 12 relie les parties 20 et 21 du voile 12 l'une à l'autre. Au niveau de cette zone 22, le voile 12 est courbe. La zone d'amorce de pliage ou de rupture 22 relie les coudes 15 des montants 8 et 9 l'un à l'autre. Elle est une zone de moindre résistance du voile 12, puisque ce dernier y est aminci.

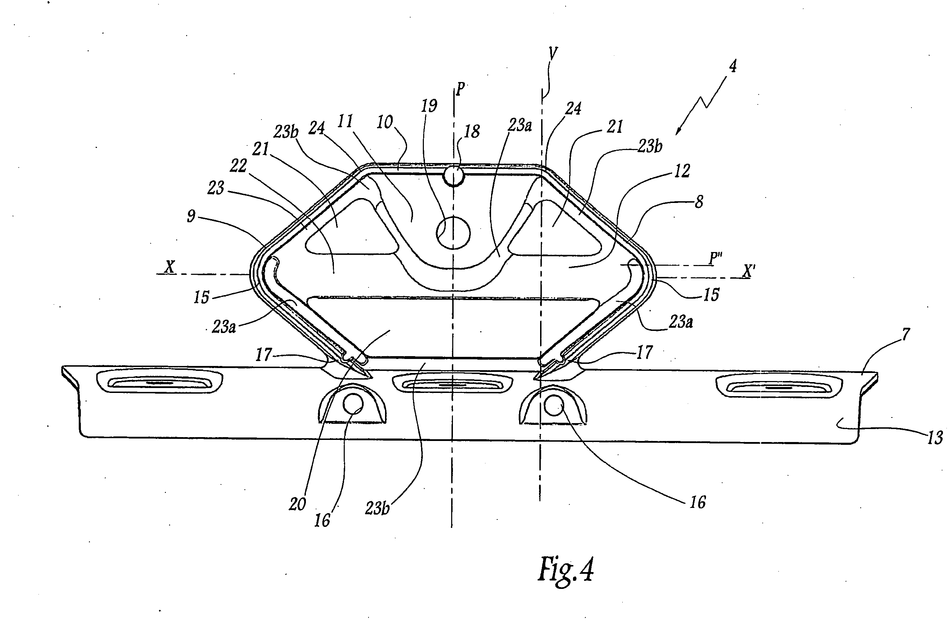

Le voile 12 comporte une autre zone amincie de moindre résistance, à savoir sa zone périphérique 23, par laquelle il se raccorde aux montants 8 et 9, ainsi qu'à l'embase 7, à la platine 11 et à la traverse 10. Dans ce qui suit, on se réfère plus particulièrement à la figure 4. Des parties, référencées 23a, de la zone périphérique 23 ont une épaisseur moindre que le reste, référencé 23b, de cette zone 23 et sont disposées de manière à faciliter l'affaissement de l'amortisseur de choc. Une des parties 23a s'étend autour de la platine 11. Chacune des deux autres parties 23a s'étend le long d'un des montants 8. et 9, depuis l'embase 7 jusqu'à un coude 15. Des épaisseurs de l'ordre de 0,5 mm pour les parties 23a de la zone périphérique de moindre résistance 23, de l'ordre de 1,2 mm pour les parties 23b de cette zone 23 et pour la zone de moindre résistante 22, et de l'ordre de 2,5 mm pour les autres zones, non amincies, du voile 12 ont donné de bons résultats.

L'appui d'une personne assise sur l'aile avant 5 se traduit par l'application sur l'embase 11 d'un effort statique ayant une composante transversale. Le voile 12 réduit la déformation de l'élément de support 4 soumis à un tel effort statique, matérialisé par la flèche F à la figure 5.

L'élément du support 4 est une pièce d'un seul tenant, moulée en un polymère, tel qu'un polymère thermodurcissable ou thermoplastique avantageusement chargé en fibres de renforcement hachées et en particules non-filiformes ou charges. La présence du voile 12 facilite le moulage de cet élément de support 4. Puisqu'il est dépourvu de trou et qu'il ferme complètement le passage que délimitent entre eux les montants 8 et 9, l'embase 7 et la platine 11, le voile 12 tend à réduire l'importance des surfaces de recollement dans l'élément 4, ce qui est avantageux. Au sens où on l'entend ici, une surface de recollement est une surface de rencontre de deux fronts de matière progressant en sens opposé lors du moulage.

Lorsque l'élément de support 4 est installé, son embase 7 s'applique contre la poutre supérieure 3 qui la bloque donc vers le bas.

Un piéton percuté au niveau des jambes par le véhicule automobile progressant normalement vers l'avant est généralement renversé sur l'avant de ce véhicule automobile. Il en résulte un choc appliqué sur le dessus du capot 2 et/ou de l'une des ailes avant du véhicule automobile. Ce choc, qui peut être un impact de tête, est globalement descendant. Sur la figure 6, où la forme d'origine du support 4 est schématisée en traits discontinus, un tel choc appliqué sur le dessus de l'aile avant 5 est symbolisé par la flèche C et conduit à un affaissement de l'amortisseur formé par l'élément du support 4. Plus précisément, les coudes 15 se comportent comme des charnières où se plient les montants 8 et 9, si bien que la traverse 10 se rapproche de l'embase 7. Les zones de jonction, référencées 24, où les montants 8 et 9 se raccordent sur la traverse 10, se comportent également comme des charnières. Il en est de même des zones de moindre résistance 17. Parallèlement, les zones de moindre résistance 22 et 23 cèdent, comme on peut le voir à la figure 7. La platine 11 passe dans l'échancrure E, si bien qu'elle n'est pas stoppée brutalement par l'embase 7.

En absorbant une partie de l'énergie du choc C, la déformation plastique des coudes 15, des zones de moindre résistance 17 et des zones de jonction 24 amortit ce choc C, ce qui réduit le risque de blessure du piéton et, si blessures il y a, la gravité de ces blessures. La rupture des zones 22 et 23 a le même effet.

Les éléments de support 4 du véhicule automobile peuvent également amortir un choc appliqué sur le capot avant 6, puisque ce dernier est en appui sur les ailes avant du véhicule automobile.

La référence X-X' désigne la direction selon laquelle les montants 8 et 9 sont décalés l'un de l'autre.

La section du voile 12 selon l'un quelconque des plans parallèles à cette direction X-X', tel que le plan P'' représenté aux figures 2 à 4, peut ne pas être rectiligne. Par exemple, elle peut être courbe.

Il est toutefois avantageux que cette section soit sensiblement rectiligne et parallèle à la direction X-X', c'est-à-dire que le voile 12 s'étende de manière sensiblement parallèle à cette direction X-X'. Tel est le cas du voile 12 de l'élément de support 4 représenté. De ce fait, ce voile 12 rompt facilement au niveau de ses zones de moindre résistance 22 et 23, lorsque le choc C conduit à l'affaissement de l'amortisseur de choc.

En effet, sauf à leurs extrémités inférieures et supérieures, les montants 8 et 9 s'éloignent l'un de l'autre lors d'un tel affaissement. Cela se traduit immédiatement par une sollicitation en traction du voile 12, si ce dernier s'étend de manière sensiblement parallèle à la direction X-X'. Cette sollicitation en traction du voile 12 favorise sa rupture au niveau de la zone 23.

En variante, l'élément de support 4 peut être conçu pour que le choc C conduise non pas à une déformation plastique mais à une rupture des coudes 15, des zones de moindre résistance 17 et/ou des zones de jonction 24. A l'inverse, au moins une partie des zones de moindre résistance 22 et 23 du voile 12 peut se déformer plastiquement au lieu de rompre.

L'élément de support 4 présente l'avantage d'avoir une hauteur peu différente de la distance sur laquelle il peut amortir un choc en s'affaissant. Grâce à cela, il peut être compact et léger.

Egalement, le raccordement des montants 8 et 9 directement sur l'embase 7 fait que l'élément de support 4 peut être réalisé de manière à être léger.

L'invention ne se limite pas au mode de réalisation décrit précédemment. En particulier, chaque aile avant du véhicule peut être supportée par un seul élément de support 4, et non par plusieurs. Si tel est le cas, la longueur de l'embase 7 peut être augmentée, et une étanchéité réalisée, par exemple, par un cordon de mastique peut facilement être prévue entre cette embase 7 et la poutre supérieure 3, dans le cadre de l'installation d'une séparation entre le compartiment moteur et le volume entre la roue 1 et l'aile 5. De plus, l'élément de support 4 peut comporter non pas un mais plusieurs amortisseurs de choc répartis le long de l'embase 7.

Par ailleurs, l'amortisseur de choc que forme l'élément 4 peut faire partie de l'aile avant 5, laquelle est alors conforme à l'invention.

En outre, cet amortisseur de choc peut être placé non pas sous l'une des ailes avant du véhicule, mais sous le capot avant 2, comme dans le deuxième mode de réalisation de l'invention représenté à la figure 8.

Dans un souci de clarté, seul certains des éléments de la partie avant d'un véhicule automobile sont représentés sur cette figure 8, où la référence 50 désigne un radiateur connu en soi. La structure porteuse qui fait partie de ce véhicule et sur laquelle est assemblée la carrosserie de celui-ci comporte une traverse supérieure de façade avant 51, à laquelle est fixé un ensemble calandre-bouclier avant 52 connu en soi. Cette traverse 51 est conforme à l'invention et comporte un amortisseur de choc 51a, qui est identique à l'amortisseur de choc 4 sauf en ce que sa partie inférieure est constituée par une paroi longitudinale 53 de la traverse 51 et non par une embase de fixation du type de celle référencée 7 ci-dessus. Un dispositif 54 de verrouillage du capot 55 du véhicule automobile en position fermée est fixé à la platine, semblable à la platine 7 mais non visible, de l'amortisseur de choc 51a. Ce dispositif de verrouillage 54, connu en soi, est à même, selon son état, de retenir ou de libérer un organe 56 fixé au capot 55.

Lorsqu'un choc appliqué sur le capot 55 est tel qu'il conduit à un affaissement de l'amortisseur de choc 51a, il est amorti par cet affaissement.

## Revendications

1. Elément formant support pour une partie (5, 6) de véhicule automobile, cet élément comprenant au moins un amortisseur de choc moulé d'un seul tenant et comportant:
- une portion inférieure (7 ; 53),
- des premier et deuxième montants en regard (8, 9) dont chacun monte à partir de la portion intérieure (7; 53) et comprend un coude (15) d'amorce de pliage ou de rupture sous l'effet d'un choc (C), et
- une portion supérieure (10, 11) que les premier et deuxième montants (8, 9) relient à la portion inférieure (7 : 53),
**caractérisé en ce que** l'amortisseur de choc comprend un voile (12) qui comporte au moins une première zone (23) de rupture sous l'effet d'un choc (C), ainsi qu'une zone coudée (22) d'amorce de pliage, formant une deuxième zone de rupture du voile (12) sous l'effet d'un choc (C), et qui relie la portion inférieure (7 ; 53) à la portion supérieure (10, 11), ainsi que les premier et deuxième montants (8, 9) l'un à l'autre.

2. Elément selon la revendication 1, **caractérisé en ce que** le coude (15) de chaque montant (8, 9) a une concavité tournée vers l'autre montant (8, 9).

3. Elément selon la revendication 2, **caractérisé en ce que** ledit voile (12) est apte à se rompre en cas de sollicitation en traction traduisant que les montants (8, 9) s'éloignent en partie l'un de l'autre.

4. Elément selon l'une quelconque des revendications précédentes, **caractérisé en ce que** la première zone de rupture est une zone amincie du voile, des parties (23a) de la première zone de rupture (23) ayant une épaisseur moindre que le reste (23b) de cette zone de rupture.

5. Elément selon l'une quelconque des revendications précédentes, **caractérisé en ce que** la zone coudée (22) du voile (12) relie le coude (15) du premier montant (8) au coude (15) du deuxième montant (9).

6. Elément selon l'une quelconque des revendications précédentes, **caractérisé en ce que** ladite première zone (23) de rupture du voile est une zone périphérique (23) par laquelle ce voile (12) se raccorde sur les portions inférieure (7) et supérieure (10, 11) de l'amortisseur de choc et sur les premier et deuxième montants (8, 9).

7. Elément selon l'une quelconque des revendications précédentes, **caractérisé en ce que** la zone coudée (22) d'amorce de pliage est une zone de moindre résistance (12).

8. Elément selon la revendication 7, **caractérisé en ce qu'**au moins la zone de moindre résistance (22, 23) est une zone amincie du voile (12).

9. Elément selon l'une quelconque des revendications précédentes, **caractérisé en ce que** le voile (12) est dépourvu de trous et ferme complètement le passage que délimite entre eux les premier et deuxième montants (8, 9) et les portions inférieure (7) et supérieure (10, 11) de l'amortisseur de choc.

10. Elément selon l'une quelconque des revendications précédentes, **caractérisé en ce que** chacun des premier et deuxième montants (8, 9) est relié à l'une au moins des portions inférieure (7; 53) et supérieure (10, 11) de l'amortisseur de choc par une zone de moindre résistance (17).

11. Elément selon l'une quelconque des revendications précédentes, **caractérisé en ce que** la portion inférieure de l'amortisseur de choc est une embase (7) de fixation de l'élément de véhicule automobile sur une structure porteuse d'assemblage d'une carrosserie de véhicule automobile.

12. Elément selon l'une quelconque des revendications 1 à 10, **caractérisé en ce que** cet élément de véhicule automobile est une partie (51) de structure porteuse d'assemblage d'une carrosserie de véhicule automobile.

13. Elément selon l'une quelconque des revendications 1 à 11, **caractérisé en ce que** cet élément de véhicule automobile est un élément intermédiaire de support d'une aile avant (5) du véhicule automobile, la portion inférieure (7) de l'amortisseur de choc étant adaptée pour être fixée sur une structure porteuse d'assemblage de la carrosserie du véhicule, la portion supérieure (10, 11) de l'amortisseur de choc étant adaptée pour y fixer l'aile avant (5).

14. Elément selon la revendication 13, **caractérisé en ce que** la portion supérieure de l'amortisseur de choc comporte une traverse (10) qui relie les premier et deuxième montants (8, 9) l'un à l'autre et une platine (11) de fixation de l'aile avant (5), cette platine (11) s'étendant vers le bas à partir de la traverse (10).

15. Elément selon l'une quelconque des revendications précédentes, **caractérisé en ce que** le voile (12) s'étend de manière sensiblement parallèle à la direction (X-X') selon laquelle lesdits premier et deuxième montants (8, 9) sont décalés l'un de l'autre.

## Claims

1. An element forming a support for a portion (5, 6) of a motor vehicle, said element including at least one impact damper molded as a single piece and comprising:
· a bottom portion (7; 53);
· first and second facing risers (8, 9), each rising from the bottom portion (7; 53) and including a bend (15) for starting folding or rupture under the event of an impact (C); and
· a top portion (10, 11) that the first and second risers (8, 9) connect to the bottom portion (7; 53);
the element being **characterized in that** the impact damper includes a web (12) having at least one first zone (23) for rupturing under the effect of an impact (C), and a bent zone (22) for starting folding, forming a second zone of rupture of the web (12) under the effect of an impact (C), and connecting the bottom portion (7; 53) to the top portion (10, 11), and also interconnecting the first and second risers (8, 9).

2. An element according to claim 1, **characterized in that** the bend (15) of each riser (8, 9) has its concave side facing towards the other riser (8, 9).

3. An element according to claim 2, **characterized in that** said web (12) is suitable for rupturing in the event of being stressed in traction as the result of parts of the risers (8, 9) moving away from each other.

4. An element according to any preceding claim, **characterized in that** the first rupture zone is a zone of the web having reduced thickness, some portions (23a) of the first rupture zone (23) presenting thickness that is less than the thickness of the remainder (23b) of the rupture zone.

5. An element according to any preceding claim, **characterized in that** the bend zone (22) of the web (12) connects the bend (15) of the first riser (8) to the bend (15) of the second riser (9).

6. An element according to any preceding claim, **characterized in that** said first rupture zone (23) of the web is a peripheral zone (23) whereby the web (12) is connected to the bottom and top portions (7 and 10, 11) of the impact damper and to the first and second risers (8, 9).

7. An element according to any preceding claim, **characterized in that** the bend zone (22) for starting folding is a zone of weakness.

8. An element according to claim 7, **characterized in that** at least the zone of weakness (22, 23) is a zone of the web (12) having reduced thickness.

9. An element according to any preceding claim, **characterized in that** the web (12) does not include any holes and completely closes the passage defined between the first and second risers (8, 9) and the bottom and top portions (7 and 10, 11) of the impact damper.

10. An element according to any preceding claim, **characterized in that** each of the first and second risers (8, 9) is connected to at least one of the bottom and top portions (7; 53 and 10, 11) of the impact damper by a zone of weakness (17).

11. An element according to any preceding claim, **characterized in that** the bottom portion of the impact damper is a base (7) for fastening the motor vehicle element on a carrier structure onto which motor vehicle bodywork is assembled.

12. An element according to any one of claims 1 to 10, **characterized in that** the motor vehicle element is a portion (51) of a carrier structure onto which motor vehicle bodywork is assembled.

13. An element according to any one of claims 1 to 11, **characterized in that** said motor vehicle element is an intermediate support element of a front fender (5) of the motor vehicle, the bottom portion (7) of the impact damper being adapted to be fastened on a carrier structure onto which the vehicle bodywork is assembled, the top portion (10, 11) of the impact damper being adapted to have the front fender (5) fastened thereto.

14. An element according to claim 13, **characterized in that** the top portion of the impact damper comprises a cross-member (10) interconnecting the first and second risers (8, 9), and a plate (11) for fastening to the front fender (5), the plate (11) extending downwards from the cross-member (10).

15. An element according to any preceding claim, **characterized in that** the web (12) extends substantially parallel to the direction (X-X') in which said first and second risers (8, 9) are offset from each other.

## Patentansprüche

1. Stützelement für ein Kraftfahrzeugteil (5, 6), wobei dieses Element zumindest einen aus einem einzigen Stück geformten Stoßfänger umfasst und aufweist:
- einen unteren Abschnitt (7; 53),
- ein erstes und ein zweites emporragendes Teil (8, 9), die sich gegenüberstehen, von denen jedes vom unteren Abschnitt (7; 53) aus emporragt und einen Bogen (15) zwecks Sollbiegung oder Sollbruchs unter der Wirkung eines Aufpralls (C) umfasst, und
- einen oberen Abschnitt (10, 11), den das erste und das zweite emporragende Teil (8, 9) mit dem unteren Abschnitt (7 ; 53) verbinden,
**dadurch gekennzeichnet, dass** der Stoßfänger ein Vlies (12) umfasst, welches zumindest eine erste Zone (23) zum Reißen unter der Wirkung eines Aufpralls (C) aufweist, sowie eine gebogene Zone (22) zur Sollbiegung, die eine zweite Zone zum Reißen des Vlieses (12) unter der Wirkung eines Aufpralls (C) bildet, und welches sowohl den unteren Abschnitt (7 ; 53) mit dem oberen Abschnitt (10, 11) als auch das erste und das zweite emporragende Teil (8, 9) miteinander verbindet.

2. Element nach Anspruch 1, **dadurch gekennzeichnet, dass** der Bogen (15) jedes emporragenden Teils (8, 9) eine Konkavität aufweist, die dem anderen emporragenden Teil (8, 9) zugewandt ist.

3. Element nach Anspruch 2, **dadurch gekennzeichnet, dass** das Vlies (12) reißen kann im Fall einer Belastung auf Zug, welche ausdrückt, dass sich die emporragenden Teile (8, 9) teilweise voneinander entfernen.

4. Element nach einem der vorstehenden Ansprüche, **dadurch gekennzeichnet, dass** die erste Reißzone eine dünner gestaltete Zone des Vlieses ist, wobei Teile (23a) der ersten Reißzone (23) eine geringere Dicke aufweisen als der Rest (23b) dieser Reißzone.

5. Element nach einem der vorstehenden Ansprüche, **dadurch gekennzeichnet, dass** die gebogene Zone (22) des Vlieses (12) den Bogen (15) des ersten emporragenden Teils (8) mit dem Bogen (15) des zweiten emporragenden Teils (9) verbindet.

6. Element nach einem der vorstehenden Ansprüche, **dadurch gekennzeichnet, dass** die erste Reißzone (23) des Vlieses eine periphere Zone (23) ist, durch welche dieses Vlies (12) an den unteren (7) und den oberen (10, 11) Abschnitt des Stoßfängers und an das erste und das zweite emporragende Teil (8, 9) anschließt.

7. Element nach einem der vorstehenden Ansprüche, **dadurch gekennzeichnet, dass** die gebogene Sollbiegezone (22) eine Zone geringeren Widerstands (12) ist.

8. Element nach Anspruch 7, **dadurch gekennzeichnet, dass** zumindest die Zone (22, 23) geringeren Widerstands eine dünner gestaltete Zone des Vlieses (12) ist.

9. Element nach einem der vorstehenden Ansprüche, **dadurch gekennzeichnet, dass** das Vlies (12) keine Löcher besitzt und die Passage vollständig schließt, die das erste und das zweite emporragende Teil (8, 9) und der untere (7) und der obere (10, 11) Abschnitt des Stoßfängers zwischen sich begrenzen.

10. Element nach einem der vorstehenden Ansprüche, **dadurch gekennzeichnet**, das jedes vom ersten und zweiten emporragenden Teil (8, 9) mit zumindest einem vom unteren (7; 53) und oberen Abschnitt (10, 11) des Stoßfängers durch eine Zone geringeren Widerstands (17) verbunden ist.

11. Element nach einem der vorstehenden Ansprüche, **dadurch gekennzeichnet, dass** der untere Abschnitt des Stoßfängers ein Sockel (7) zur Befestigung des Kraftfahrzeugelements auf einer Tragstruktur zur Montage einer Kraftfahrzeugkarosserie ist.

12. Element nach einem der Ansprüche 1 bis 10, **dadurch gekennzeichnet, dass** dieses Kraftfahrzeugelement ein Teil (51) einer Tragstruktur zur Montage einer Kraftfahrzeugkarosserie ist.

13. Element nach einem der Ansprüche 1 bis 11, **dadurch gekennzeichnet, dass** dieses Kraftfahrzeugelement ein Zwischenelement zum Stützen eines Vorderflügels (5) des Kraftfahrzeugs ist, wobei der untere Abschnitt (7) des Stoßfängers angepasst ist, um auf einer Tragstruktur zur Montage der Fahrzeugkarosserie befestigt zu werden, wobei der obere Abschnitt (10, 11) des Stoßfängers angepasst ist, um daran den Vorderflügel (5) zu befestigen.

14. Element nach Anspruch 13, **dadurch gekennzeichnet, dass** der obere Abschnitt des Stoßfängers ein Querteil (10), welches das erste und das zweite emporragende Teil (8, 9) miteinander verbindet, und eine Platte (11) zur Befestigung des Vorderflügels (5) aufweist, wobei diese Platte (11) sich vom Querteil (10) aus nach unten erstreckt.

15. Element nach einem der vorstehenden Ansprüche, **dadurch gekennzeichnet, dass** sich das Vlies (12) im Wesentlichen parallel zur Richtung (X-X') erstreckt, in der das erste und das zweite emporragende Teil (8, 9) gegeneinander versetzt sind.
